# EUROPÄISCHE PATENTSCHRIFT

(11) **EP 0 923 426 B1**
(45) Veröffentlichungstag und Bekanntmachung des Hinweises auf die Patenterteilung: **15.11.2000**
(21) Anmeldenummer: 97941911.6
(22) Anmeldetag: 04.08.1997
(51) Int. Cl.: B23Q 1/00, B25B 11/00

(54) **BEARBEITUNGSMASCHINE**
PROCESSING MACHINE
MACHINE D'USINAGE

(30) Priorität: 05.08.1996 DE 19631661
(43) Veröffentlichungstag der Anmeldung: 23.06.1999
(73) Patentinhaber: HOMAG MASCHINENBAU AG, D-72296 Schopfloch (DE)
(72) Erfinder: GAUSS, Achim, D-75323 Bad Wildbad (DE); FREY, Karl, D-72296 Schopfloch (DE); KALMBACH, Kurt, D-72293 Glatten (DE)
(74) Vertreter: HOFFMANN - EITLE
(86) Internationale Anmeldenummer: EP9704237
(87) Internationale Veröffentlichungsnummer: WO9805467

(56) Entgegenhaltungen:
- EP-A- 0 307 645
- EP-A- 0 687 521
- DE-A- 3 826 830
- DE-A- 3 906 300
- DE-C- 4 404 413

## Beschreibung

Die Erfindung betrifft eine Bearbeitungsmaschine nach dem Oberbegriff des Patentanspruchs 1.

Derartige Bearbeitungsmaschinen, die auch als Bearbeitungszentren bezeichnet werden, dienen der Bearbeitung insbesondere plattenförmiger Werkstücke aus Holz-, Kunststoff-, Schicht- oder Verbundwerkstoffen. Ein solches Bearbeitungszentrum weist zumindest einen, häufig aber zwei oder mehr Bearbeitungsplätze auf. Über den Bearbeitungsplätzen ist zumindest eine Bearbeitungseinheit in drei zueinander senkrecht stehenden Achsen, also in X-, Y- und Z-Achsenrichtung verfahrbar. Die Bearbeitungseinheit umfaßt zumindest eine Spindeleinheit zur Aufnahme von Bearbeitungswerkzeugen, Bearbeitungsaggregaten, Handhabungsaggregaten usw. Mit derartigen Bearbeitungszentren wird eine Vielzahl aufeinanderfolgender Bearbeitungsschritte, wie etwa Bohr-, Fräs- oder Meßvorgänge, durchgeführt.

Für eine Aufspannung der jeweils zu bearbeitenden Werkstücke am Bearbeitungsplatz sind herkömmliche Bearbeitungszentren zudem mit Tragschienen ausgestattet, auf denen Schlitteneinheiten in Form von verschiebbaren Vakuum-Saugköpfen angeordnet sind. Solche auf Tragschienen angeordnete Vakuum-Saugköpfe bilden eine Saugspanneinrichtung, auf der die Werkstücke während ihrer Bearbeitung mittels einer Vakuumansaugung fest aufgespannt werden. Dabei sind zusätzlich zu einer Verschiebbarkeit der Vakuum-Saugköpfe (nachfolgend einfach als "Saugköpfe" bezeichnet) in der Regel auch die Tragschienen selbst in Querrichtung zu ihren Längsachsen verschiebbar.

Beispielsweise im deutschen Gebrauchsmuster DE 94 19 700.8 U1 ist eine gattungsgemäße Bearbeitungsmaschine beschrieben, bei der zusätzlich zur verfahrbaren Bearbeitungseinheit ein separater, unabhängig verfahrbarer Ausleger vorgesehen ist, der für die Saugkopfpositionierung zuständig ist. Über eine Mitnehmereinrichtung, die in Eingriff mit einem zu positionierenden Schlitteneinheit gebracht werden kann, verschiebt der separate Ausleger den Saugkopf entlang der Tragschiene in eine gewünschte Position. In einer anderen Ausführungsform weisen die Saugköpfe einen Eigenantrieb auf, um die Köpfe zu verfahren. Als ein Beispiel für einen Eigenantrieb ist ein Linearmotor vorgeschlogen.

Die Versorgung der Saugköpfe auf den Tragschienen erfolgt bisher über Schleppschläuche und Schleppkabel. Jeder Saugkopf ist individuell an solche Schleppschläuche und -kabel angeschlossen, um ihn beispielsweise mit Vakuum zu versorgen, damit der Saugkopf ein aufgelegtes Werkstück durch Vakuumansaugung fixieren kann. Wenn der Saugkopf auf der Tragschiene in eine neue Position verschoben wird, wandern die Schleppschläuche und -kabel entsprechend mit. Bei mehreren Saugköpfen auf einer Tragschiene oder benachbarten Tragschienen muß daher darauf geachtet werden, daß sich die Versorgungsleitungen für die einzelnen Saugköpfe untereinander nicht in die Quere kommen. Somit wird die Saugerpositionierung erschwert, da eventuelle gegenseitige Behinderungen der Saugköpfe mit ihren Versorgungsleitungen berücksichtigt werden müssen. Es wird aber auch die Programmierung der Werkstückbearbeitung erschwert, da entsprechende Kollisionskorridore berücksichtigt werden müssen, um eine Kollision der Bearbeitungseinheit mit den Versorgungsleitungen der Saugköpfe zu vermeiden. Außerdem sind solche Schleppversorgungsleitungen vergleichsweise aufwendig und es besteht stets die Gefahr, daß diese Leitungen beschädigt werden und somit die Funktionsfähigkeit der Saugköpfe auf den Tragschienen beeinträchtigt wird.

Aus der DE-A-38 26 830 ist eine Lineartransfervorrichtung für Werkstückträger bekannt, die in verschiedenen, hintereinander angeordneten Arbeitsstationen eingebaut werden kann, um Werkstücke in den verschiedenen Stationen zu bearbeiten bzw. zu montierende Werkstücke von einer Station zur anderen zu transferieren. Die Lineartransfervorrichtungen weisen eine Führungsschiene auf, an der Energievesorgungsabschnitte linear ausgebildet sind. Ebenso ist ein Antriebsabschnitt an der Führungsschiene vorhanden. Auf der Schiene läuft ein Schlitten, der mit einem eigenen Antriebsmotor ausgestattet ist und eine Antriebsrolle antreibt, die an dem Antriebsabschnitt der Führungsschiene anliegt. Die Energieversorgungsabschnitte an der Führungsschiene werden mittels Schleifkontakten am Schlitten abgegriffen. Es wird also der Antriebsmotor über die Energieversorgungsabschnitte mit Strom versorgt. Es ist darüber hinaus offenbart, daß der Antriebsmotor auch als Servomotor ausgebildet sein kann und über in der Führungsschiene verlaufende Steuerleitungen gesteuert werden kann.

In der DE-A-39 06 300 ist eine Führungseinrichtung für eine trnsportable Werkzeugmaschine (Kreissäge) offenbart, die einen Staubabsaugkanal umfaßt, der mit einer längsgeschlitzten Kanalwand mit einer Dichtung aus flexiblem Material versehen ist. In dieses flexible Dichtungsmaterial ist ein die Vorschubbewegung der Werkzeugmaschine mitmachendes Mundstück eingedrückt.

Der Erfindung liegt das technische Problem zugrunde, eine Bearbeitungsmaschine zu schaffen, bei der die Versorgung von Schlitteneinheiten kompakter und geordneter erfolgt, und darüberhinaus die Schlitteneinheiten individuell verfahren und steuerbar sind.

Dieses technische Problem wird erfindungsgemäß von einer Bearbeitungsmaschine mit den Merkmalen des Patentanspruchs 1 gelöst.

Bei der erfindungsgemäßen Lösung weisen die Tragschienen jeweils elektrische und pneumatische Versorgungsschnittstellen für die Schlitteneinheiten auf. Die Versorgungsschnittstellen erstrecken sich dabei linear entlang der Längserstreckung der Tragschiene.

Jede Schlitteneinheit ist mit einem eigenen Antriebsaggregat ausgestattet und somit eigenständig verfahrbar. Vorzugsweise ist das Antriebsaggregat als Elektromotor mit einem Ritzel ausgebildet, das in eine tragschienenseitige Zahnstange eingreift. Die Zahnstange erstreckt sich dabei entlang der Tragschiene. So wird lediglich eine einzige Zahnstange je Tragschiene benötigt, an der dann sämtliche auf der Tragschiene befindlichen Schlitteneinheiten entlanglaufen. Jede Schlitteneinheit kann so mit ihrem Elektromotor individuell verfahren werden. Zudem erlaubt es diese Ausgestaltung, daß eine Schlitteneinheit von der Tragschiene abgehoben oder auf diese abgesetzt werden kann, da dann nur das Ritzel außer Eingriff oder in Eingriff mit der Zahnstange gebracht werden muß, um den Antrieb abzukoppeln oder einzukoppeln. Anstelle eines Ritzel-/Zahnstangenantriebs kann der Antrieb zwischen Schlitteneinheit und Tragschiene auch als Schneckenrad-/Schneckenwellenantrieb, als Linearantrieb, als Pneumatikantrieb, z.B. mit einem kolbenstangenlosen Zylinder, oder in Form eines anderen geeigneten Antriebs ausgeführt werden.

Weiterhin weisten die Schlitteneinheiten ihre eigenen Leistungs- und/oder Logik-Steuerungsmodule auf. So kann jede einzelne Schlitteneinheit dezentral gesteuert werden.

Auf diese Weise können die Schlitteneinheiten, die sich auf der Tragschiene befinden, die erforderlichen elektrischen Energien und elektronischen Informationen/Signale sowie die erforderliche Versorgung mit Vakuum und Druckluft und/oder anderen Fluiden an ihrer jeweiligen Position direkt an der Tragschiene abgreifen. Es entfallen also sämtliche Schleppschläuche und Schleppkabel, wie sie bisher jeder einzelnen Schlitteneinheit zugeführt wurden, denn die Versorgungsstränge für die Schlitteneinheiten sind nun in die Tragschienen integriert. Somit ergibt sich eine äußerst kompakte, integrale Lösung für das Versorgungsproblem der verschiebbaren Schlitteneinheiten. Da die Versorgungsstränge fest in den Tragschienen integriert sind, sind sie wesentlich besser gegen Beschädigungen geschützt als die bisher verwendeten Schleppschläuche und -kabel, und die Versorgungsstränge müssen nicht mehr mit der Verschiebung der Schlitteneinheiten mitbewegt werden. Es verlaufen bei der erfindungsgemäßen Lösung nun keine Versorgungsleitungen mehr in den Bereichen zwischen den Tragschienen und zwischen den Schlitteneinheiten, und die Versorgungsstränge können sich nun nicht mehr gegenseitig behindern. Man erhält eine übersichtliche, klar gegliederte Versorgung der Schlitteneinheiten ohne anfällige, im Freien geführte Komponenten. Erfindungsgemäß wird also eine lineare Multifunktionsschnittstelle an der Tragschiene geschaffen, über die die auf der Tragschiene befindlichen Schlitteneinheiten an jeder beliebigen Position entlang der Tragschiene versorgt werden.

Durch die erfindungsgemäße Lösung wird die Positionierung von Schlitteneinheiten auf den Tragschienen stark vereinfacht. Da keine Rücksicht mehr auf deren Versorgungsleitungen genommen werden muß, können die Schlitteneinheiten beliebig nahe nebeneinander positioniert werden und so läßt sich eine größere Anzahl von Schlitteneinheiten auf den Tragschienen unterbringen als bisher. Zudem wird bei der erfindungsgemäßen Lösung die Programmierung der Werkstückbearbeitung erheblich vereinfacht, da nur die Schlitteneinheiten selbst hinsichtlich einer Kollisionsgefahr berücksichtigt werden müssen, jedoch nicht von den Schlitteneinheiten abgehende Versorgungsleitungen, die einer kollisionsvermeidenden Programmierung nur schwer zugänglich sind.

Erfindungsgemäß können die Tragschienen in ihrer Längserstreckung sowohl geradlinig, als auch gekrümmt verlaufen. Die Schienenwege, entlang denen die Schlitteneinheiten verfahrbar sind, können also sowohl geradlinige Streckenabschnitte, als auch Kurven umfassen. Die erfindungsgemäßen Versorgungsschnittstellen, die sich linear entlang der Längserstreckung der Tragschiene erstrecken, folgen im Falle von gekrümmten Tragschienen natürlich dem Verlauf der Tragschiene.

Die erfindungsgemäße Lösung ist für unterschiedlichste Arten von Schlitteneinheiten einsetzbar. Unter einer Schlitteneinheit werden Schlitten, Wagen, Plattformen, Träger oder dergleichen verstanden, die auf bzw. an der Tragschiene verfahrbar sind und bei Bedarf unterschiedliche Aggregate umfassen bzw. tragen. Die Schlitteneinheiten können Werkstückaufspannaggregate umfassen. Diese können insbesondere als Vakuum-Saugköpfe ausgestaltet sein, sie können jedoch ebenso andere Aufspannaggregate umfassen, beispielsweise mechanische Klemmaggregate. Ferner können die Schlitteneinheiten als Werkstücktransportaggregate sowie Werkstückhandhabungsaggregate ausgeführt sein. Diese können insbesondere als Greiferaggregate oder Förderaggregate ausgebildet sein. Weiterhin können die Schlitteneinheiten Werkzeugträgeraggregate sowie Werkstückbearbeitungsaggregate umfassen. Derartige Aggregate können also Bearbeitungsvorgänge am Werkstück vornehmen, und zwar zusätzlich zur Bearbeitungseinheit der Bearbeitungsmaschine. Solche Schlitteneinheiten, die Bearbeitungswerkzeuge bzw. Bearbeitungsaggregate tragen, können beispielsweise zum eigenständigen Bohren von Löchern in das aufgespannte Werkstück, zum Einbringen von Dübeln in entsprechende Bohrungen am Werkstück sowie eine Vielzahl anderer Bearbeitungsschritte eingesetzt werden.

In einer bevorzugten Ausführungsform der Erfindung sind die elektrischen Versorgungsschnittstellen der Tragschienen in Form von Schleifschienen ausgebildet. Die Schleifschienen wirken mit entsprechenden Schleifkontakten der Schlitteneinheiten zusammen. Es können dabei mehrere einzelne Schleifschienen ausgebildet sein, die jeweils verschiedene Energien und Informationen übertragen. Um eine kompakte Lösung zu realisieren, ist es vorteilhaft, mehrere Anschlußschienen zu einem Schienenkörper zusammenzufassen, der dann mehrere Schienenabschnitte zur Übertragung verschiedener elektrischer Energien und Informationen aufweist. In die verschiedenen Schienenabschnitte greifen dann verschiedene, dazu passend ausgebildete Schleifkontakte der Schlitteneinheiten ein. Die Verwendung von Schleifschienen und Schleifkontakten ermöglicht eine robuste und zuverlässige Versorgung der Schlitteneinheiten und ermöglicht ein problemloses Verschieben der Schlitteneinheiten in Richtung der Tragschienenlängsachse entlang der elektrischen Versorgungsschnittstelle.

In einer bevorzugten Ausführungsform sind die pneumatischen Versorgungsschnittstellen der Tragschienen jeweils in Form eine Rinne ausgebildet, die mit einer Lineardichtung abgeschlossen ist. Entsprechende Zapfstutzen der Schlitteneinheiten wirken mit der Lineardichtung zusammen. Auch bei der pneumatischen Versorgungsschnittstelle wird also auf diese Weise eine schienenartige Schnittstelle realisiert. Entlang der Rinne liegt je nach Bedarf Druckluft oder Vakuum an, um die Schlitteneinheiten auf der Tragschiene entsprechend zu versorgen. In einer günstigen Ausgestaltung besteht die Lineardichtung aus zwei Druckschläuchen, die parallel zueinander in Richtung der Rinnenlängsachse verlaufen. Die beiden Druckschläuche liegen dabei mit ihren Längsseiten aneinander an und schließen so die Rinne ab. Die Dichtungswirkung kann dabei problemlos an die jeweiligen Erfordernisse angepaßt werden, indem das Druckniveau in den Druckschläuchen, die beispielsweise mit Druckluft gefüllt sind, entsprechend verändert wird. So kann durch einen höheren Druck in den Druckschläuchen die Dichtungswirkung der Lineardichtung vergrößert werden und umgekehrt. Ein dazu passender Zapfstutzen an der Schlitteneinheit kann dann zwischen die Druckschläuche der Lineardichtung eingeführt werden, um die in der Rinne anliegende Druckluft oder die anliegende Vakuumversorgung abzugreifen. Der eingeführte Zapfstutzen wird dabei von den Druckschläuchen umschlossen, so daß die Dichtungswirkung um die Zapfstelle herum erhalten bleibt. Der Zapfstutzen kann in Richtung der Tragschienenlängsachse zusammen mit der Schlitteneinheit verfahren werden, indem er sich zwischen den beiden Druckschläuchen entlangbewegt und dabei stets von diesen umschlossen wird. Um eine kompakte Ausführung zu erhalten, ist es vorteilhaft, die pneumatische Versorgungsschnittstelle so auszugestalten, daß an einer einzigen Rinne wahlweise eine Druckluftversorgung oder eine Vakuumversorgung angelegt werden kann. Bei Bedarf ist es aber ebenso möglich, mehrere, parallel zueinander verlaufende Rinnen in der Tragschiene vorzusehen, an denen jeweils die gewünschte pneumatische Versorgungsart, also Druckluft oder Vakuum, separat bereitgestellt wird. Bei Bedarf können an der pneumatischen Versorgungsschnittstelle auch andere pneumatische Fluide bereitgehalten werden. Ferner ist es erfindungsgemäß auch möglich, analog zu der pneumatischen Versorgungsschnittstelle eine Schnittstelle zur Versorgung der Schlitteneinheiten mit einer Flüssigkeit vorzusehen. Eine solche Schnittstelle könnte ebenfalls in Form einer Rinne mit einer Lineardichtung ausgeführt sein, in die dann ein entsprechender Zapfstutzen eingreift.

Vorzugsweise sind die elektrischen und pneumatischen Versorgungsschnittstellen seitlich an der Tragschiene angeordnet. Die Schlitteneinheiten können dann auf der Oberseite der Tragschiene angeordnet werden und die mechanische Führung zwischen Schlitteneinheit und Tragschiene kann ebenfalls auf der Oberseite der Tragschiene realisiert werden. Die seitliche Anordnung der Versorgungsschnittstellen bringt zudem den Vorteil mit sich, daß die Versorgungsschnittstellen besser gegen Verschmutzung geschützt sind, da Späne etc., die während der Bearbeitung des Werkstücks herabfallen, an den Versorgungsschnittstellen vorbeifallen und sich dort praktisch nicht ablagern können.

Insbesondere ist es bevorzugt, die elektrischen Versorgungsschnittstellen auf der einen Seite und die pneumatischen Versorgungsschnittstellen auf der anderen Seite der Tragschiene anzuordnen. So ergibt sich eine klar gegliederte Führung der Versorgungsstränge. Selbstverständlich ist es aber auch möglich, die elektrischen und pneumatischen Versorgungsschnittstellen an anderen Positionen der Tragschiene anzuordnen, beispielsweise auf deren Oberseite oder deren Unterseite. Natürlich ist es auch möglich, alle elektrischen und pneumatischen Versorgungsschnittstellen einer Tragschiene auf einer Seite der Tragschiene anzuordnen und auf diese Weise die Versorgungsschnittstellen an einer Tragschienenseite zusammenzufassen.

Vorzugsweise sind die Schlitteneinheiten mit Kopplungsarmen ausgestattet, die für einen Eingriff in die Versorgungsschnittstellen ausgebildet sind. So kann die Schlitteneinheit auf der Oberseite der Tragschiene angeordnet werden und die Kopplungsarme stellen die Verbindung zu den Versorgungsschnittstellen in der Tragschiene her. Wenn die Versorgungsschnittstellen seitlich an der Tragschiene angeordnet sind, verlaufen die Kopplungsarme zweckmäßigerweise seitlich von der Schlitteneinheit nach unten und weisen im Bereich ihrer freien Enden passende Schleifkontakte und Zapfstutzen auf, mit denen sie in die Versorgungsschnittstellen eingreifen. Falls die elektrischen Versorgungsschnittstellen auf der einen Tragschienenseite und die pneumatischen Versorgungsschnittstellen auf der anderen Tragschienenseite angeordnet sind, ist günstigerweise auf jeder Seite der Schlitteneinheit ein Kopplungsarm ausgebildet, wobei der eine Kopplungsarm in die elektrische Versorgungsschnittstelle eingreift, während der andere Kopplungsarm in die pneumatische Versorgungsschnittstelle eingreift. Die Kopplungsarme können beispielsweise bügelförmig oder in einer anderen geeigneten Gestalt ausgeführt sein. Falls sich die Versorgungsschnittstellen beispielsweise auf der Unterseite der Tragschiene befinden, können die Kopplungsarme die Tragschiene entsprechend umgreifen, um die Verbindung zwischen Schlitteneinheit und Versorgungsschnittstellen herzustellen. Eine Anordnung der Versorgungsschnittstellen auf der Unterseite der Tragschiene ist besonders unempfindlich gegen eine Verschmutzung.

In einer bevorzugten Ausführungsform sind die Kopplungsarme aus den Versorgungsschnittstellen ausrückbar bzw. in die Versorgungsschnittstellen einrückbar. Sie können dabei bezüglich der Tragschiene in seitlicher Richtung in die Versorgungsschnittstellen eingekoppelt oder davon ausgekoppelt werden. In einer vorteilhaften Ausgestaltung ist das Aus- und Einrücken der Kopplungsarme automatisch betätigbar. Ein solches automatisches Ausrücken und Einrücken der Kopplungsarme kann z.B. durch einen Druckluftantrieb, einen hydraulischen Antrieb, einen elektrischen Antrieb oder in vergleichbarer Weise realisiert werden. In Verbindung mit einer entsprechenden Führung der Schlitteneinheit auf der Tragschiene, die ein Abheben der Schlitteneinheit erlaubt, kann nach dem Ausrücken der Kopplungsarme die Schlitteneinheit direkt von der Tragschiene abgehoben werden, und umgekehrt kann die Schlitteneinheit direkt an einer gewünschten Position auf die Tragschiene aufgesetzt werden und durch anschließendes Einrücken der Kopplungsarme an die Versorgungsstränge der Tragschiene angekoppelt werden.

Vorzugsweise ist zwischen Tragschiene und Schlitteneinheit eine Luftkissenführung vorgesehen. Dadurch wird ein Verkanten der Schlitteneinheit auf der Tragschiene vermieden und die Schlitteneinheit kann besonders reibungsarm entlang der Tragschiene verschoben werden, da lediglich an den Versorgungsschnittstellen eine geringe Reibung wirksam wird.

In einer günstigen Ausgestaltung erfolgt die Ausbildung des Luftkissens zwischen Tragschiene und Schlitteneinheit durch eine Druckluftzufuhr von der Schlitteneinheit aus. So wird das Luftkissen jeweils nur an derjenigen Schlitteneinheit ausgebildet, die gerade verschoben werden soll. Natürlich können auch an mehreren auf einer Tragschiene befindlichen Schlitteneinheiten gleichzeitig die Luftkissen für eine Verschiebung ausgebildet werden. Die Luftkissen werden also durch die schlittenseitige Druckluftzufuhr immer gerade dort ausgebildet, wo sie gebraucht werden. Vorzugsweise ist die Druckluftzufuhr von der Schlitteneinheit auf eine Vakuumansaugung umstellbar. So kann zunächst ein Luftkissen erzeugt werden, um die Schlitteneinheit in eine gewünschte Position entlang der Tragschiene zu verschieben, und anschließend kann die Druckluftzufuhr auf eine Vakuumsaugung umgestellt werden, so daß sich die Schlitteneinheit an die Tragschiene ansaugt, und sich so in der gewünschten Position auf der Tragschiene selbst fixiert.

Erfindungsgemäß ist es jedoch auch möglich, die Druckluftzufuhr zur Ausbildung eines Luftkissens auf seiten der Tragschiene anzuordnen, auch wenn sie dort natürlich einer Verschmutzung direkter ausgesetzt ist. Weiterhin ist es erfindungsgemäß möglich, die Schlitteneinheiten auf der Tragschiene in einer gewünschten Position nicht durch Vakuumansaugung, sondern beispielsweise durch eine mechanische Klemmung oder auf vergleichbare Weise zu befestigen. Weiterhin kann erfindungsgemäß anstelle einer Luftkissenführung ebenso eine Linearführung, Rollenführung oder eine vergleichbare Führung zwischen Tragschiene und Schlitteneinheit vorgesehen werden.

Auch wenn es günstig ist, die Verbindung zwischen Schlitteneinheit und Tragschiene so auszugestalten, daß die Schlitteneinheiten unmittelbar von der Tragschiene in einer Richtung quer zur Tragschienenlängsachse abgehoben werden können, ist es erfindungsgemäß ebenso möglich, eine Führung zwischen Tragschiene und Schlitteneinheit auszubilden, bei er die Schlitteneinheiten jeweils nur in Schienenlängsrichtung von der Tragschiene abgezogen werden oder auf diese aufgeschoben werden können. Anstelle aus- und einrückbarer Kopplungsarme kann erfindungsgemäß natürlich auch ein permanenter Eingriff in die Versorgungsschnittstellen vorgesehen werden.

Die Tragschienen können erfindungsgemäß sowohl in Längsrichtung, als auch in Querrichtung der Bearbeitungsmaschine angeordnet sein. In einer günstigen Ausgestaltung sind die Tragschienen in Durchlaufrichtung der Bearbeitungsmaschine angeordnet, so daß Schlitteneinheiten auf den Tragschienen vorteilhaft für eine Werkstückzuführung und Werkstückabführung eingesetzt werden können.

Nachfolgend wird ein bevorzugtes Ausführungsbeispiel der erfindungsgemäßen Bearbeitungsmaschine mit Bezug auf die beigefügten Zeichnungen näher erläutert. Es zeigt:
- Fig. 1: eine schematische Vertikalschnittansicht einer erfindungsgemäßen Tragschiene mit einer darauf aufgesetzten Schlitteneinheit in einem angekoppelten Zustand;
- Fig. 2: eine schematische Vertikalschnittansicht der Tragschiene und der Schlitteneinheit in Fig. 1 in einem abgekoppelten Zustand.

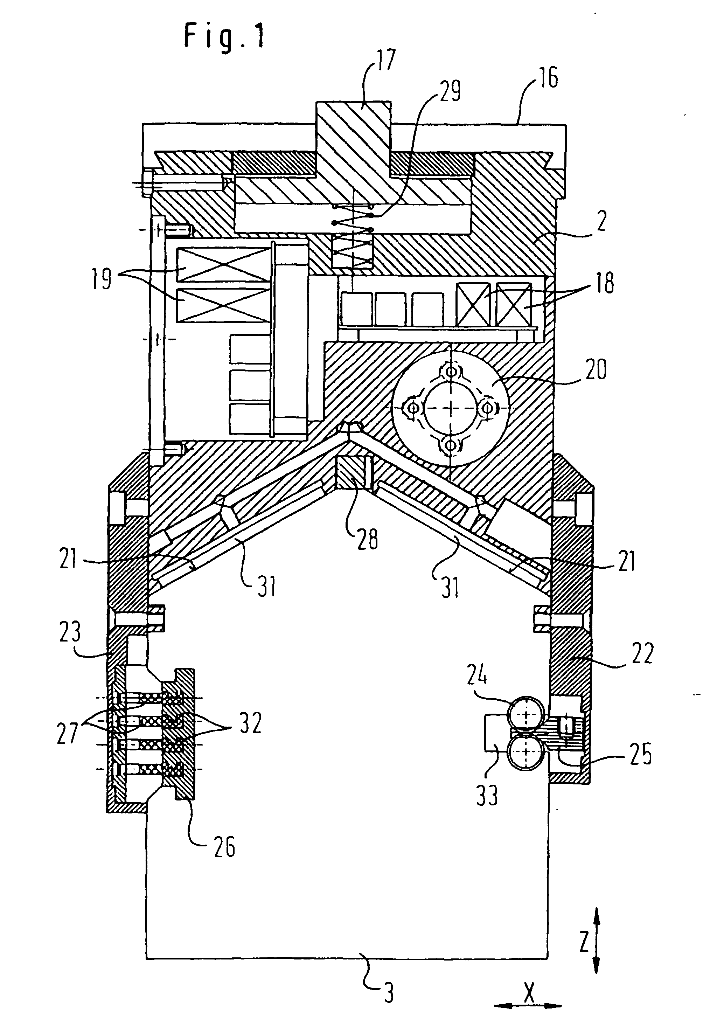

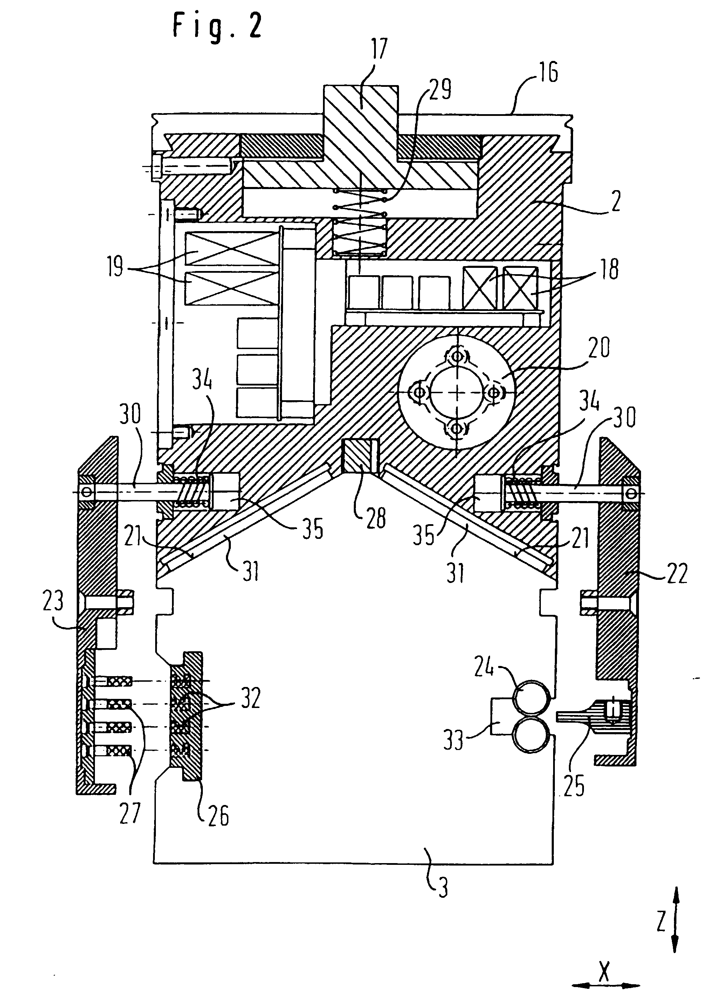

In Fig. 1 und Fig. 2 ist eine Tragschiene 3 dargestellt, auf die eine Schlitteneinheit in Form eines Saugkopfes 2 aufgesetzt ist. In Richtung der Tragschienenlängsachse, die sich in den Figuren senkrecht zur Zeichenebene erstreckt, sind in der Regel mehrere solcher Saugköpfe 2 angeordnet.

Die Tragschiene 3 ist in der Mitte ihrer Oberseite mit einer Zahnstange 28 versehen, von der aus sich nach beiden Seiten hin Auflageflächen 21 wegerstrecken. Die beiden Auflageflächen 21 verlaufen im Winkel zueinander und zwar so, daß die Auflageflächen 21 jeweils schräg zur Seite hin abfallen. Die Zahnstange 28 erstreckt sich in Richtung der Tragschienenlängsachse über die gesamte Länge der Tragschiene 3. In den Figuren auf der rechten Seite sind die Zähne der Zahnstange angeordnet, wobei unterhalb der Zähne ein Freiraum ausgebildet ist, so daß Verschmutzungen, z.B. herabfallende Späne, durch die Zähne hindurchfallen und an den schrägen Auflageflächen 21 abrutschen können. Dadurch bleibt die Zahnstangenführung funktionsfähig.

In die Seitenflächen der Tragschiene 3 integriert sind eine elektrische Versorgungsschnittstelle 26, 32 und eine pneumatische Versorgungsschnittstelle 24, 33. Die elektrische Versorgungsschnittstelle, die sich in den Fig.1 und 2 auf der linken Seite der Tragschiene befindet, umfaßt einen Schleifschienenkörper 26, der sich parallel zur Tragschienenlängsachse über die Länge der Tragschiene 3 erstreckt. Im Schleifschienenkörper 26 sind im Beispiel vier Schleifschienenabschnitte 32 angeordnet, an denen elektrische Energie sowie elektrische Signale und Informationen abgegriffen werden können. Der Schleifschienenkörper 26 ist etwas zur Tragschienenmittelebene hin zurückversetzt, damit z.B. herabfallende Späne entlang der Tragschienenseitenfläche außen vor der elektrischen Schnittstelle vorbeifallen, so daß diese nicht verschmutzt wird. In den Fig. 1 und 2 auf der rechten Seite der Tragschiene ist die pneumatische Schnittstelle angeordnet, an der wahlweise eine Vakuumversorgung oder eine Druckluftversorgung bereitgestellt wird. Eine Rille 33 erstreckt sich von der Seite her in die Tragschiene 3 hinein und sie ist nach außen hin mit einer Lineardichtung 24 verschlossen. Diese Lineardichtung umfaßt zwei Druckschläuche, die mit ihren Längsseiten gegeneinander drücken. Sowohl die Rinne 33 als auch die Druckschläuche verlaufen in Richtung der Tragschienenlängsachse und erstrecken sich über die Länge der Tragschiene 3. Das Druckniveau in den Druckschläuchen ist variabel, so daß die Dichtungswirkung je nach Bedarf eingestellt werden kann. Von außen her kann mit einem Zapfstutzen 25 zwischen die Druckschläuche eingegriffen werden, um die pneumatische Versorgung abzugreifen. Auch die pneumatische Versorgungsschnittstelle ist etwas zur Tragschienenmittelebene hin zurückversetzt, um so Beschädigungen der Lineardichtung zu vermeiden.

Der Saugkopf 2 umfaßt einen quaderförmigen Grundkörper, der an seiner Unterseite mit einem Auflagebereich versehen ist, der zu den schrägen Auflageflächen 21 und zur Zahnstange 28 der Tragschiene 3 paßt. Am Auflagebereich des Saugkopfes 2 sind passend zu den Auflageflächen 21 Ausnehmungen 31 ausgebildet. In diese Ausnehmungen 31 kann vom Saugkopf her Druckluft eingeführt werden, so daß sich dort zwischen dem Saugkopf und der Tragschiene ein Luftkissen aufbaut, auf dem der Saugkopf in Tragschienenlängsrichtung gleiten kann. Ebenso kann die Druckluftzufuhr auf eine Vakuumansaugung umgestellt werden, so daß sich der Saugkopf im Bereich der Ausnehmungen 31 an die Auflageflächen 21 der Tragschiene ansaugt und sich dort somit selbst fixiert.

In seitlich herabhängender Anordnung sind am Schlitteneinheit zwei Versorgungsbügel 22, 23 angeordnet, die die Versorgungsverbindung zwischen dem Saugkopf und den tragschienenseitigen Versorgungsschnittstellen herstellen. In den Figuren auf der linken Seite befindet sich der Versorgungsbügel 23, an dessen unterem Endbereich Schleifkontakte 27 angeordnet sind, die zu den Schleifschienenabschnitten 32 auf seiten der Tragschiene passen. In den Figuren auf der rechten Seite ist der Versorgungsbügel 22 angeordnet, der in seinem unteren Endbereich einen Zapfstutzen 25 aufweist, der für einen Eingriff zwischen die Druckschläuche der Lineardichtung 24 und in die Rinne 33 hinein eingerichtet ist. In Fig. 1 sind die Versorgungsbügel 22, 23 in derjenigen Position gezeigt, in der sie jeweils in die zugehörigen Versorgungsschnittstellen der Tragschiene eingreifen. Somit ist der Saugkopf 2 an die Tragschiene 3 versorgungsmäßig angekoppelt.

Ferner umfaßt der Saugkopf einen Elektromotor 20, der ein (nicht dargestelltes) Ritzel antreibt, das in die Zahnstange 28 der Tragschiene eingreift und somit eine Verschiebung des Saugkopfes in Tragschienenlängsrichtung auf dem Luftkissen erlaubt, das zwischen Saugkopf und Tragschiene ausgebildet wird. Weiterhin sind im Saugkopf verschiedene Steuerungsmodule 18, 19 untergebracht, die der Steuerung der elektrischen Antriebsenergie sowie der Logiksteuerung des Saugkopfes dienen. Auf seiner Oberseite ist der Saugkopf mit einem Saugbelag 16 versehen. Oben in der Mitte des Saugkopfes ist ein Tellerventil 17 angeordnet, das gegen die Kraft einer Feder 29 durch Eindrücken in den Saugkopf hinein betätigbar ist. Das Tellerventil 17 ist lediglich vereinfacht angedeutet und enthält in seinem Inneren verschiedene Einzelkomponenten. Das Tellerventil 17 dient dazu, diejenigen Saugköpfe, die vom aufzuspannenden Werkstück nicht beaufschlagt werden, hinsichtlich der Vakuumansaugung auf ihrem Saugbelag 16 abzuschalten. Damit wird verhindert, daß das Vakuumsystem, das die verschiedenen Saugköpfe zentral versorgt, an einem nicht beaufschlagten Saugkopf die Umgebungsatmosphäre ansaugt, wodurch das Vakuum zusammenbrechen würde. Erst bei gedrücktem Tellerventil 17 wird die Vakuumansaugung am Saugbelag 16 freigegeben. Der gezeigte Saugkopf 2 ist als Doppelvakuumsauger ausgeführt, da er sowohl sich selbst durch Vakuumansaugung auf der zugehörigen Tragschiene 3 fixiert, als auch ein aufgelegtes Werkstück durch Vakuumansaugung auf dem Saugbelag 16 fixiert.

Wie in Fig. 2 gezeigt ist, sind die Versorgungsbügel 22, 23 über Haltebolzen 30 mit dem Grundkörper des Saugkopfes verbunden. Über Federn 34 werden die Haltebolzen 30 in Richtung zum Saugkopf hin, also in Richtung zur Tragschienenmittelebene hin mit einer Kraft beaufschlagt. Somit werden die Versorgungsbügel 22, 23, wie in Fig. 1 gezeigt, durch die Federn 34 automatisch in Eingriff mit den Versorgungsschnittstellen 26, 33 gehalten. Durch eine Beaufschlagung von Kammern 35 mit Druckluft werden, wie in Fig. 2 dargestellt, die Haltebolzen 30 und damit die Versorgungsbügel 22, 23 in eine seitliche Richtung ausgerückt, d.h. außer Eingriff mit den Versorgungsschnittstellen 26, 33 gebracht. Die Andrückkraft, die aufgrund der Druckluft in den Kammern 35 auf die Haltebolzen in Richtung nach außen wirkt, ist dabei größer als die Rückstellkraft, die die Federn 34 auf die Haltebolzen in Richtung nach innen aufbringen. Das Ausrücken und Einrücken der Versorgungsbügel kann also druckluftgesteuert automatisch erfolgen, indem für den Ausrückvorgang Druckluft in die Kammern 35 aufgebracht wird und für den Einrückvorgang die Druckluft daraus abgeführt wird.

In dem Zustand, wie er in Fig. 2 gezeigt ist, kann der Saugkopf 2 in vertikaler Richtung nach oben von der Tragschiene 3 abgenommen werden bzw. in der umgekehrten Richtung auf die Tragschiene aufgesetzt werden.

## Patentansprüche

1. Bearbeitungsmaschine, mit
- einem oder mehreren, im wesentlichen in einer gemeinsamen Ebene liegenden Bearbeitungsplätzen, insbesondere für plattenförmige Werkstücke aus Holz oder Holzwerkstoffen,
- mindestens einer in drei senkrecht zueinander stehenden Achsen (X-, Y- und Z-Achse) über den Bearbeitungsplätzen verfahrbaren Bearbeitungseinheit,
- einer Anzahl von Tragschienen (3), auf denen Schlitteneinheiten (2) in der Ebene der Bearbeitungsplätze verschiebbar angeordnet sind, und
- einem oder mehreren Aggregaten an den Schlitteneinheiten (2),
**dadurch gekennzeichnet, daß**
- die Tragschienen (3) jeweils elektrische und pneumatische Versorgungsschnittstellen (26, 33) für die Schlitteneinheiten (2) aufweisen, wobei die Versorgungsschnittstellen sich linear entlang der Längserstreckung der Tragschiene (3) erstrecken,
- die Schlitteneinheiten (2) mit eigenen Antriebsaggregaten (20) zum eigenständigen Verfahren der jeweiligen Schlitteneinheit (2) ausgestattet sind, die ihre Antriebsenergie jeweils über die elektrische Versorgungsschnittstelle (26) abgreifen, und
- die Schlitteneinheiten (2) eigene Leistungs- und/oder Logik-Steuerungsmodule (18, 19) zur Steuerung der elektrischen Antriebsenergie und/oder Logiksteuerung der Aggregate an den Schlitteneinheiten (2) aufweisen.

2. Bearbeitungsmaschine nach Anspruch 1,
**dadurch gekennzeichnet, daß**
die elektrischen Versorgungsschnittstellen der Tragschienen (3) in Form von Schleifschienen (26) ausgebildet sind, die mit Schleifkontakten (27) der Schlitteneinheiten (2) zusammenwirken.

3. Bearbeitungsmaschine nach Anspruch 1 oder 2,
**dadurch gekennzeichnet, daß**
die pneumatischen Versorgungsschnittstellen der Tragschienen (3) jeweils in Form einer Rinne (33) ausgebildet sind, die mit einer Lineardichtung (24) abgeschlossen ist, welche mit Zapfstutzen (25) der Schlitteneinheiten (2) zusammenwirkt.

4. Bearbeitungsmaschine nach einem der Ansprüche 1 bis 3,
**dadurch gekennzeichnet, daß**
die elektrischen und pneumatischen Versorgungsschnittstellen (26, 33) seitlich an der Tragschiene (3) angeordnet sind.

5. Bearbeitungsmaschine nach Anspruch 4,
**dadurch gekennzeichnet, daß**
die elektrischen Versorgungsschnittstellen (26) auf der einen Seite und die pneumatischen Versorgungsschnittstellen (33) auf der anderen Seite der Tragschiene (3) angeordnet sind.

6. Bearbeitungsmaschine nach einem der Ansprüche 1 bis 5,
**dadurch gekennzeichnet, daß**
die Schlitteneinheiten (2) mit Kopplungsarmen (22, 23) für einen Eingriff in die Versorgungsschnittstellen (26, 33) ausgestattet sind.

7. Bearbeitungsmaschine nach Anspruch 6,
**dadurch gekennzeichnet, daß**
die Kopplungsarme (22, 23) bezüglich der Tragschiene (3) in seitlicher Richtung für eine Auskopplung und Einkopplung an die Versorgungsschnittstellen (26, 33) aus- und einrückbar sind.

8. Bearbeitungsmaschine nach Anspruch 7,
**dadurch gekennzeichnet, daß**
das Aus- und Einrücken der Kopplungsarme (22, 23) automatisch betätigbar ist.

9. Bearbeitungsmaschine nach einem der Ansprüche 1 bis 8,
**dadurch gekennzeichnet, daß**
zwischen Tragschiene (3) und Schlitteneinheit (2) eine Luftkissenführung vorgesehen ist.

10. Bearbeitungsmaschine nach Anspruch 9,
**dadurch gekennzeichnet, daß**
zur Ausbildung eines Luftkissens eine Druckluftzufuhr von der Schlitteneinheit (2) aus erfolgt.

11. Bearbeitungsmaschine nach Anspruch 10,
**dadurch gekennzeichnet, daß**
die Druckluftzufuhr von der Schlitteneinheit (2) auf eine Vakuumansaugung umstellbar ist.

12. Bearbeitungsmaschine nach Anspruch 1,
**dadurch gekennzeichnet, daß**
das Antriebsaggregat als Elektromotor (20) mit einem Ritzel ausgebildet ist, das in eine Zahnstange(28) eingreift, die an der Tragschiene (3) angebracht ist und sich entlang deren Längserstreckung erstreckt.

## Claims

1. Processing machine with
- one or more processing stations essentially lying in a common plane, especially for plate-shaped work pieces made of wood or other woodworking materials,
- at least one processing unit moveable over the processing stations in three axes (X, Y and Z axis) arranged perpendicular to each other,
- a number of support rails (3), on which carriage units (2) are moveably arranged in the plane of the processing stations and
- one or more drive units on the carriage units (2),
characterised in that
- the support rails (3) each have electrical and pneumatic supply interfaces (26, 33) for the carriage units (2), wherein the supply interfaces extend in a line along the longitudinal distance of the support rails (3),
- the carriage units (2) are equipped with their own drive units (20) for independent propulsion of the respective carriage unit (2), which drive units derive their drive energy in each case via the electrical supply interface (26), and
- the carriage units (2) have their own power and/or logic control modules (18, 19) for the control of the electrical drive energy and/or logical control of the drive units on the carriage units (2).

2. Processing machine according to claim 1, characterised in that the electrical supply interfaces of the support rails (3) are constructed in the form of sliding rails (26), which act in combination with sliding contacts (27) of the carriage units (2).

3. Processing machine according to claim 1 or 2,
characterised in that the pneumatic supply interfaces of the support rails (3) are constructed in each case in the form of a groove (33), which is closed with a linear seal (24), which acts in combination with tap nipples (25) of the carriage units (2).

4. Processing machine according to one of the claims 1 to 3, characterised in that the electrical and pneumatic supply interfaces (26, 33) are arranged laterally on the support rail (3).

5. Processing machine according to claim 4, characterised in that the electrical supply interfaces (26) are arranged on one side and the pneumatic supply interfaces (33) on the other side of the support rail (3).

6. Processing machine according to one of the claims 1 to 5, characterised in that the carriage units (2) are equipped with coupling arms (22, 23) for engaging with the supply interfaces (26, 33).

7. Processing machine according to claim 6, characterised in that with regard to the support rail (3) the coupling arms (22, 23) can be engaged and disengaged in a sideways direction for coupling to and decoupling from the supply interfaces (26, 33).

8. Processing machine according to claim 7, characterised in that the engaging and disengaging of the coupling arms (22, 23) can be automatically actuated.

9. Processing machine according to one of the claims 1 to 8, characterised in that an air cushion guide is provided between support rail (3) and carriage unit (2).

10. Processing machine according to claim 9, characterised in that to form an air cushion compressed air is supplied from the carriage unit (2).

11. Processing machine according to claim 10,
characterised in that the compressed air supply from the carriage unit (2) can be changed to vacuum suction.

12. Processing machine according to claim 1, characterised in that the drive unit is constructed as an electric motor (20) with a pinion which meshes with a toothed rack (28), which is accommodated on the support rail (3) and extends along its longitudinal distance.

## Revendications

1. Machine d'usinage, comportant
- un ou plusieurs emplacements d'usinage situés sensiblement dans un plan commun, en particulier pour des pièces à façonner en forme de plaques, en bois ou en matériaux ligneux,
- au moins une unité d'usinage déplaçable sur les emplacements d'usinage, selon trois axes perpendiculaires entre eux (axes X, Y et Z),
- une pluralité de rails support (3), sur lesquels des unités à chariots (2) sont déplaçables dans le plan des emplacements d'usinage, et
- un ou plusieurs groupes montés sur les unités à chariots (2),
caractérisée en ce que
- les rails support (3) présentent chacun des interfaces d'alimentation (26, 33) électriques et pneumatiques, pour les unités à chariots (2), les interfaces d'alimentation s'étendant de façon linéaire dans la longueur du rail support (3),
- les unités à chariots (2) étant équipées de groupes d'entraînement (20) propres pour le déplacement proprement dit de chaque unité à chariot (2), groupes qui prélèvent leur énergie d'entraînement chacun par l'interface d'alimentation électrique (26), et
- les unités à chariots (2) présentent des modules de commande de puissance et/ou de commande logique (18, 19) propres, pour la commande de l'énergie d'entraînement électrique et/ou la commande de logique des groupes sur les unités à chariots (2).

2. Machine d'usinage selon la revendication 1, caractérisée en ce que les interfaces d'alimentation électriques des rails support (3) sont réalisés sous la forme de rails de frottement (26) coopérant avec des contacts de frottement (27) appartenant aux unités à chariots (2).

3. Machine d'usinage selon la revendication 1 ou 2, caractérisée en ce que les interfaces d'alimentation pneumatiques des rails support (3) sont chacune réalisées sous la forme d'une goulotte (33) fermée par un joint d'étanchéité linéaire (24) qui coopère avec des tubulures de soutirage (25) appartenant aux unités à chariots (2).

4. Machine d'usinage selon l'une des revendications 1 à 3, caractérisée en ce que les interfaces d'alimentation (26, 33) électriques et pneumatiques sont disposées latéralement sur le rail support (3).

5. Machine d'usinage selon la revendication 4, caractérisée en ce que les interfaces d'alimentation électriques (26) sont disposées sur un côté et les interfaces d'alimentation pneumatiques (33) sont disposées sur l'autre côté du rail support (3).

6. Machine d'usinage selon l'une des revendications 1 à 5, caractérisée en ce que les unités à chariots (2) sont équipées de bras de couplage (22, 23) devant s'engager dans les interfaces d'alimentation (26, 33).

7. Machine d'usinage selon la revendication 6, caractérisée en ce que les bras de couplage (22, 23) peuvent être déployés et rétractés en direction latérale par rapport au rail support (3), pour effectuer le désaccouplement et l'accouplement aux interfaces d'alimentation (26, 33).

8. Machine d'usinage selon la revendication 7, caractérisée en ce que le déploiement et la rétraction des bras de couplage (22, 23) sont actionnables automatiquement.

9. Machine d'usinage selon l'une des revendications 1 à 8, caractérisée en ce qu'un guidage à coussin d'air est prévu entre le rail support (3) et l'unité à chariot (2).

10. Machine d'usinage selon la revendication 9, caractérisée en ce qu'une alimentation en air comprimé est effectuée par l'unité à chariot (2) pour constituer un coussin d'air.

11. Machine d'usinage selon la revendication 10, caractérisée en ce que l'alimentation en air comprimé, faite par l'unité à chariot (2), peut être commutée en une aspiration de vide.

12. Machine d'usinage selon la revendication 1, caractérisée en ce que le groupe d'entraînement est réalisé sous la forme de moteur d'entraînement (20) avec un pignon, s'engrenant dans une crémaillère (28), montée sur le rail support (3) et s'étendant dans sa direction longitudinale.
